# EUROPEAN PATENT SPECIFICATION

(11) **EP 0 751 843 B1**
(45) Date of publication and mention of the grant of the patent: **22.09.1999**
(21) Application number: 95914626.7
(22) Date of filing: 22.03.1995
(51) Int. Cl.: B23B 27/10, B23B 31/40, B23Q 11/10

(54) **DEVICE FOR COOLING A MACHINE TOOL RETAINED IN A REVOLVER PLATE**
VORRICHTUNG ZUM KÜHLEN EINES MASCHINENWERKZEUGES IN EINER REVOLVERPLATTE
DISPOSITIF DE REFROIDISSEMENT D'UNE OUTIL DE MACHINE RETENUE DANS UNE PLAQUE REVOLVER

(30) Priority: 25.03.1994 SE 9401004
(43) Date of publication of application: 08.01.1997
(73) Proprietor: SPIREX TOOLS AB, S-703 56 Örebro (SE)
(72) Inventor: DANIELSEN, Jan, S-703 56 Örebro (SE)
(74) Representative: Lautmann, Kurt O.
(86) International application number: SE9500292
(87) International publication number: WO9526247

(56) References cited:
- EP-A- 0 329 633
- WO-A-93/18880
- DE-B- 2 725 655
- US-A- 1 589 487
- US-A- 3 215 443
- US-A- 3 791 660

## Description

The present invention relates to a device for cooling of a machining tool retained in a revolver plate according to the preamble of claim 1. In most types of machining it is generally necessary to provide cooling for the machining tool and this is achieved by directing one or more waterjets towards the tip of the machining tool, emanating from the toolholder or from some other part of the machine. This method of cooling a machining tool functions satisfactorily, but does not allow for any changes in design to reduce the overhang of the machining tool. All equipment for cooling is demanding and usually requires special toolholders. Such a toolholder is placed in a recess in a machine or machining centre e.g. revolverplate, beside which recess is a connection to the coolant supply. A toolholder for a tool equipped to receive a coolant may thus be placed in a recess in any machine at all, provided the machine also has a connection to a coolant supply.

The present invention relates to a toolholder for a machining tool of the type mentioned above, said toolholder with machining tool intended to be secured in a recess in a machine, wherein toolholder and machine are provided with suitable attachment means to ensure that the toolholder is firmly anchored in its recess and the machining tool can thus perform the desired machining. The holder is preferably in the form of a peripheral flange provided with a shaft having a cavity for a machining tool. The shaft provided externally with a threadlike surface designed to cooperate with a moveable threadlike part inside said recess so that the latter threaded part is pushed to abutment with the threaded part of the shaft in order to achieve retention. A coolant connection is arranged beside the recess in e.g. revolverplate intended to cooperate with a connection for coolant in the toolholder inserted. The toolholder is thus supplied coolant and according to the invention the coolant in the toolholder is not conducted through the cavity of the toolholder to reach the machining tool externally. Instead, according to the invention the coolant received to the cavity is conducted through channels in the cylindrical shaft of the toolholder to the bottom of the shaft. The coolant thus reaches the machining tool at its back end. To enable cooling of the machining tool it will have one or more through channels with their orifices at the front end of the machining tool preferably at the part of the machiningtool performing the machining. The machiningtool according to the invention may be inserted directly in the cavity or the toolholder provided the machining tool and the cavity have the same diameter. However, if the machiningtool and the cavity have different diameters the machining tool must be provided with a peripheral sleeve/collet.

In standard and similar machining tools such as boring bars with axially milled periphery, coolant may pass along the length of the machining tool. The machining side of the flange of the toolholder can be provided with nozzles connected to the channel system, which supplies coolant to the bottom of the holder so that a machining tool inserted can also be cooled from the outside.

To ensure firm retention of a machining tool in a toolholder it is advisable for the inner wall of the toolholder to be flexible, for at tubular space to be arranged inside said wall, and for this space to be filled with a pressure medium such as oil or grease and to then influence the pressure medium by suitable means, such as a screw, causing the inner wall to move inwards for effective retention of a machining tool.

The outer part of the shaft of the toolholder may be provided with a surrounding wall that is fully or partially flexible, there being a space behind said wall for a pressure medium, enabling the outer surrounding wall to move outwards, thus effectively retaining the toolholder in its recess in, for instance a revolverplate.

According to the invention the spaces used for retaining a machining tool and for retaining a toolholder in a recess may be connected and filled with a predetermined quantity of pressure medium. This enables the flexible inner wall of the recess and the flexible outer wall of the toolholder to be controlled using single adjustment means such as a screw.

Further characteristics of the present invention will be revealed in the appended claims.

The present invention will be described in more detail with reference to the accompanying two drawings, in which
- Figure 1: shows a revolverplate in a machine or machining centre including a toolholder,
- Figure 2: shows a separate toolholder of the type referred to in Figure 1, and
- Figure 3: shows a toolholder in Figure 2 provided with a machining tool.

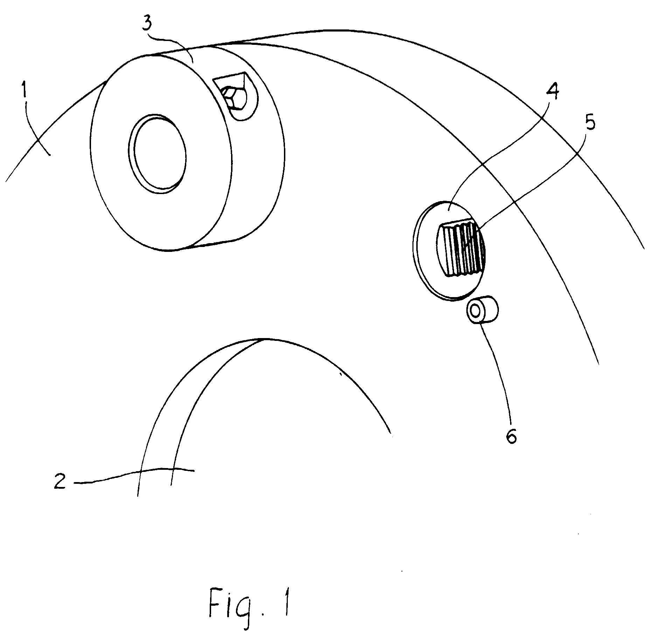

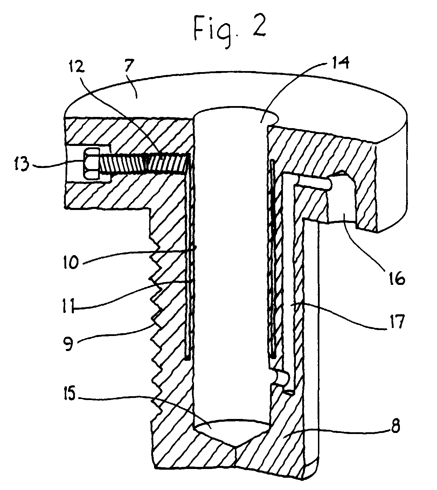

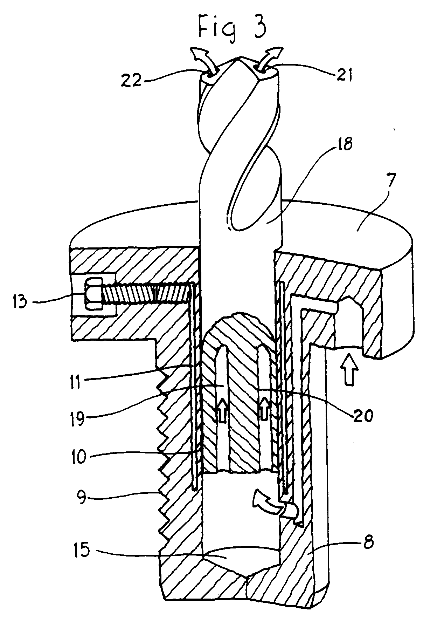

Figure 1 shows a revolverplate 1 designed for attachment to an optional machine or machining centre by way of its central opening 2. The revolverplate 1 thus shows a toolholder 3 without machining tool and a recess 4 for a toolholder. The recess is provided with a part 5, which is radially and otherwise movable and which is rectangular or cylindrical and has a threadlike surface 5. Beside the recess 4 is a connection 6 for the supply of coolant. The connection is connected to a coolant source. The recess 4 is designed for insertation of a toolholder 3, and such a toolholder is shown separately in Figures 2 and 3. The toolholder consists of a flange part 7 constituting the end of a shaft 8, preferably cylindrical in shape. The shaft is provided on the outside with a rectangular field provided with a permanent threadlike part 9 designed to cooperate with the moveable part containing a rectangular threadlike surface 5. The toolholder has a cavity 14 provided with a bottom 15. The cavity 14 has an inner, flexible wall 10 and behind the flexible wall is a tubular space 11. Said space is in communication with a channel 12. The channel 12 is closed by a screw 13 that can be moved in and out as desired. Channel 12 and the tubular space 11 are filled with a pressure medium such as oil or grease. Activating screw 13 will cause said pressure medium to influence the wall 10 so that it expands inwards. The backside of the flange part 7 of the toolholder is provided with a connection means 16 intended for cooperation with the connection 6 in Figure 1. The connection means 16 communicates with a channel 17 opening into the bottom 15 of the cavity 14. The outer surrounding wall of the shaft 8 may consist fully or partially of a flexible wall and, behind this, a substantially tubular space filled with a pressure medium. Said spaces are in communication with a screw capable of influencing the pressure medium so that the outer surrounding wall can move outwards, thereby increasing retention of the toolholder 3 in a recess in the machine e.g. revolverplate. However it is probably advisable to allow the tubular space for the flexible outer wall to be in communication with the tubular space 11 next to the cavity 14 of the toolholder. This allows both the innerwall and the outerwall to be influenced by a single screw 13.

The toolholder 3 thus has a shaft that is substantially cylindrical, but it should be obvious that too holding methods may be used in which the shaft may have any suitable shape whatsoever, provided it is effectively secured in a machine.

The cavity 14 is designed to receive a machiningtool 18 in the form of for example a drill or boring bar and for the invention to function, the machining tool will have at least one through hole or channel from its backend to the orifice located at the tip of the machining tool. Figure 3 shows two channels 19 and 20 with outlets 21 and 22 at the tip of the tool. The two channels 19 and 20 are straight, but it should be evident that they may have any suitable shape whatsoever.

It should also be clear that the channel 17 may also be connected to nozzles on the machining side of the flange 7 or on the circumference of the flange 7, and in that case one or more nozzles can be directed towards the machining tool 18 enabling it to be cooled from the outside as well.

Referring to Figure 3, a machining tool 18 is shown as inserted into the cavity 14. When the machining tool 18 has been inserted fully into the cavity 14 of the toolholder Fig 3 the toolholder 3 with machining tool 18 will be inserted into a recess 4 in the revolverplate 1 of a machine in the way that the rectangular threaded part on the shaft 8 is located immediately opposite the radially, or otherwise, movable threaded part 5. In inserted position of the toolholder 3, said threaded parts 5 is moved so that the threaded sections 5 and 9 come into locking contact with each other. The toolholder is thus well secured in the revolverplate 1. In this situation the screw 13 is activated, whereupon the wall 11 is forced to move inwards, thereby retaining the machining tool 18. If the shaft 8 is also provided with a flexible outer wall with pressure medium behind it, the flexible wall will then move towards the recess 4 in the revolverplate 1, thus retaining the toolholder even more securely than by means of threads 9 and 15. Since the connection 16 is in contact with the connection 6, coolant will be supplied to the machining tool via channel 17 and bottom 18, which coolant will subsequently pass through the channels 19 and 20 in the machining tool 18 and out through the openings 21 and 22 to directly reach the machining point, where cooling is absolutely necessary.

## Claims

1. A device for cooling of a machining tool retained in a revolverplate (1) provided with a number of recesses 4 for the receipt of exchangeable toolholders (3) with a machining tool (18) secured therein, each toolholder (3) having a collarlike endportion (7) for abutment against the revolverplate (1),
**characterized** in that each collarlike end (7) has a channel (16, 17) for coolant, the inlet opening (16) of said channel (16, 17) being arranged on the backside of the collarlike end part (7), abutting against the revolverplate (1), said inlet opening (16) being designed to communicate with a coolant outlet (6) on an opposite part of the revolverplate (1), and said channel (16, 17) communicating via a cylindrical shaft (8) for retaining the machining tool (18), the latter having one or more through channels (19, 20, 21, 22) running internally or externally from one end of the machining tool (18) to the other end of the tool, in order to convey said coolant further to the end of the machining tool (18).

2. A device as claimed in claim 1,
**characterized** in that the cylindrical shaft (8) of the toolholder (3) has a cavity wall (10) that is displaceable inwardly and is surrounded by a tubular space (11) containing a pressure medium such as grease or oil to control the displacement of said cavity wall (10).

3. A device as claimed in claim 1,
**characterized** in that one or more channels (19, 20, 21, 22) in the machining tool (18) have an extension deviating from straight being, for instance, spiral in shape.

4. A device as claimed in claim 1,
**characterized** in that the machining tool (18) is provided with a surrounding intermediate collar compensating the difference in diameter between the machining tool (18) and the cavity (14) of the toolholder (3).

5. A device as claimed in claim 2,
**characterized** in that the length of the displaceable cavity wall (10) is sufficient to ensure effective retention of a machining tool (18) with or without intermediate collar.

6. A device according to claim 1,
**characterized** in that the cylindrical shaft (8) has an outer, peripheral surface that is fully or partially displaceable outwardly, there being a space behind said surface for a pressure medium such as grease or oil in order to achieve said outward displacement of said surface.

7. A device as claimed in claims 2 and 6,
**characterized** in that a predetermined quantity of pressure medium is used for displacement of said inner wall (10) and of said outer surface and that a single arrangement (13) is used to control displacement of the inner wall (10) and of the outer surface.

8. A device as claimed in claims 2 and 6,
**characterized** in that a predetermined quantity of pressure medium is used for each space for displacement of the inner wall (10) and of the outer surface and that two separate arrangements (13) are used to achieve displacements of the wall (10) and of the outer surface.

## Patentansprüche

1. Vorrichtung zum Kühlen eines Bearbeitungswerkzeugs, das in einer Revolverplatte (1) gehalten ist, die eine Anzahl von Ausnehmungen (4) für die Aufnahme von austauschbaren Werkzeughaltern (3) mit jeweils einem darin befestigten Bearbeitungswerkzeug (18) aufweist, wobei jeder Werkzeughalter (3) einen kragenförmigen Endteil (7) zur Anlage an der Revolverplatte (1) aufweist,
**dadurch gekennzeichnet,** daß jedes kragenförmige Ende (7) einen Kanal (16, 17) für Kühlmittel aufweist, wobei die Einlaßöffnung (16) des Kanals (16, 17) an der Rückseite des kragenförmigen Endteils (7) angeordnet ist, die gegen die Revolverplatte (1) anliegt, wobei die Einlaßöffnung (16) zum Kommunizieren mit einem Kühlmittelauslaß (6) an einem gegenüberliegenden Teil der Revolverplatte (1) ausgebildet ist, und wobei der Kanal (16, 17) über einen zylindrischen Schaft (8) zum Festhalten des Bearbeitungswerkzeugs (18) kommuniziert, wobei letzterer einen oder mehrere durchgehende Kanäle (19, 20, 21, 22) aufweist, die innen oder außen von einem Ende des Bearbeitungswerkzeugs (18) zu dessen anderen Ende verlaufen, um das Kühlmittel weiter bis zum Ende des Bearbeitungswerkzeugs (18) zu fördern.

2. Vorrichtung nach Anspruch 1, **dadurch gekennzeichnet,** daß der zylindrische Schaft (8) des Werkzeughalters (3) eine Hohlraumwand (10) aufweist, die nach innen verformbar ist und von einem rohrförmigen Raum (11) umgeben ist, der ein Druckmedium wie Fett oder Öl zum Steuern der Verformung der Hohlraumwandung (10) enthält.

3. Vorrichtung nach Anspruch 1, **dadurch gekennzeichnet,** daß ein oder mehrere Kanäle (19, 20, 21, 22) in dem Bearbeitungswerkzeug (18) einen vom geraden Verlauf abweichenden Verlauf haben, der beispielsweise spiralförmig ist.

4. Vorrichtung nach Anspruch 1, **dadurch gekennzeichnet,** daß das Bearbeitungswerkzeug (18) mit einem umlaufenden Zwischenkragen versehen ist, der die Durchmesserdifferenz zwischen dem Bearbeitungswerkzeug (18) und dem Hohlraum (14) in dem Werkzeughalter (3) ausgleicht.

5. Vorrichtung nach Anspruch 2, **dadurch gekennzeichnet,** daß die Länge der verformbaren Hohlraumwandung (10) ausreichend ist, um ein wirksamens Festhalten eines Bearbeitungswerkzeugs (18) mit oder ohne Zwischenkragen zu gewährleisten.

6. Vorrichtung nach Anspruch 1, **dadurch gekennzeichnet,** daß der zylindrische Schaft (8) eine äußere Umfangsfläche hat, die ganz oder teilweise nach außen verformbar ist, wobei hinter dieser Oberfläche ein Hohlraum für ein Druckmedium wie Fett oder Öl zum Bewirken der Auswärtsverformung der Oberfläche vorgesehen ist.

7. Vorrichtung nach Anspruch 2 und 6, **dadurch gekennzeichnet,** daß eine vorgegebene Menge von Druckmedium für die Verformung der inneren Wand (10) und der äußeren Oberfläche dient und daß eine einzige Anordnung (13) zum Steuern der Verformung der inneren Rind 110) und der Oberfläche dient.

8. Vorrichtung nach Anspruch 2 und 6, **dadurch gekennzeichnet,** daß eine vorgegebene Menge von Druckmedium für jeden Raum zur Verformung der inneren Wand (10) und der äußeren Oberfläche verwendet wird und daß zwei getrennte Anordnungen (13) zum Bewirken der Verformungen der Wand (10) und der äußeren Oberfläche dienen.

## Revendications

1. Un dispositif pour le refroidissement d'un outil d'usinage contenu dans une plaque tournante (1) équipée d'un certain nombre d'encastrements (4) pour recevoir des porte-outils échangeables (3) avec un outil d'usinage (18) fixé à l'intérieur, chaque porte-outil (3) ayant une partie d'extrémité de type collet (7) pour aboutement contre la plaque tournante (1),
**caractérisé en** ce que chaque extrémité de type collet (7) a un conduit (16, 17) pour liquide de refroidissement, l'ouverture d'entrée (16) du dit conduit (16, 17) étant arrangée sur la face arrière de la partie d'extrémité de type collet (7), aboutissant contre la plaque tournante (1), ladite ouverture d'entrée (16) étant conçue pour communiquer avec une sortie de liquide de refroidissement (6) sur une partie opposée de la plaque tournante (1), et ledit conduit (16, 17) communiquant avec un arbre cylindrique (8) pour retenir l'outil d'usinage (18), ce dernier ayant un ou plusieurs conduits traversants (19, 20, 21, 22) passant à l'intérieur ou à l'extérieur d'un bout de l'outil d'usinage (18) à l'autre bout de l'outil pour acheminer ledit liquide de refroidissement davantage vers l'extrémité de l'outil d'usinage (18).

2. Un dispositif selon la revendication 1,
**caractérisé en** ce que l'arbre cylindrique (8) du porte-outil (3) a une paroi de cavité (10) qui est déplaçable vers l'intérieur et entourée d'un espace tubulaire (11) contenant un fluide de pression tel que graisse ou huile pour contrôler le déplacement de ladite paroi de cavité (10).

3. Un dispositif selon la revendication 1,
**caractérisé en** ce qu'un ou plusieurs conduits (19, 20, 21, 22) dans l'outil d'usinage (18) a une extension n'étant pas droite, par exemple, de forme hélicoïdale.

4. Un dispositif selon la revendication 1,
**caractérisé en** ce que l'outil d'usinage (18) est équipé d'un collet intermédiaire l'entourant, compensant la différence en diamètre entre l'outil d'usinage (18) et la cavité (14) du porte-outil (3).

5. Un dispositif selon la revendication 2,
**caractérisé en** ce que la longueur de la paroi de cavité déplaçable (10) est suffisante pour assurer une rétention efficace d'un outil d'usinage (18) avec ou sans collet intermédiaire.

6. Un dispositif selon la revendication 1,
**caractérisé en** ce que l'arbre cylindrique (8) a une surface périphérique extérieure, entièrement ou partiellement déplaçable vers l'extérieur, un espace étant prévu derrière ladite surface pour un fluide de pression tel que graisse ou huile pour accomplir ledit déplacement vers l'extérieur de ladite surface.

7. Un dispositif selon les revendications 2 et 6,
**caractérisé en** ce qu'une quantité prédéterminée de fluide de pression est utilisée pour le déplacement de ladite paroi intérieure (10) et ladite surface extérieure et qu'un seul arrangement (13) est utilisé pour contrôler le déplacement de la paroi intérieure (10) et de la surface extérieure.

8. Un dispositif selon les revendications 2 et 6,
**caractérisé en** ce qu'une quantité prédéterminée de fluide de pression est utilisée pour le déplacement de la paroi intérieure (10) et de la surface extérieure et que deux arrangements séparés (13) sont utilisés pour accomplir les déplacements de la paroi (10) et de la surface extérieure.
